**Europäisches Patentamt**

(19) **European Patent Office**

**Office européen des brevets**

(11) Publication number : **0 233 767 B1**

# (12) EUROPEAN PATENT SPECIFICATION

(45) Date of publication of patent specification :
04.09.91 Bulletin 91/36

(51) Int. Cl.⁵ : **B27N 3/02**

(21) Application number : 87301285.0

(22) Date of filing : 13.02.87

(54) **Woody fibre mat.**

(30) Priority : 18.02.86 JP 33626/86

(43) Date of publication of application :
26.08.87 Bulletin 87/35

(45) Publication of the grant of the patent :
04.09.91 Bulletin 91/36

(84) Designated Contracting States :
DE FR GB

(56) References cited :
WO-A-82/03359
US-A- 3 795 575
US-A- 4 555 430

(73) Proprietor : **Chisso Corporation**
**6-32, Nakanoshima 3-chome Kita-ku**
**Osaka-shi Osaka-fu (JP)**
Proprietor : **Kaihatsu-board Corporation**
**632-1, Azamakuuchiminami**
**Ooazaminamishigou Kouzashimachi**
**Aizuwakamatsushi Fukushimaken (JP)**

(72) Inventor : **Takada, Minoru**
**1-28, Babamotomachi**
**Aizuwakamatsushi Fukushimaken (JP)**
Inventor : **Oohori, Hidetaka**
**227-29, Azanakamurahigashi Ooazayasumi**
**Ikkimachi**
**Aizuwakamatsushi Fukushimaken (JP)**

(74) Representative : **Lamb, John Baxter et al**
**MARKS & CLERK 57/60 Lincoln's Inn Fields**
**London WC2A 3LS (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a moulding mat composed mainly of woody fibres.

Known moulding mats using woody fibres as the main raw material include a product obtained by blending long fibres and a thermoplastic or thermoset resin adhesive with woody fibres (see Japanese laid-open patent application No. Sho 51-43478/1976), and a product obtained by the steps of blending low melting point thermoplastic fibres and a thermoset resin with woody fibres and long fibres, and then heat-treating the resulting blend at a temperature below the curing temperature of the thermoset resin to thereby stabilize the constitution of the resulting material through melt adhesion of the thermoplastic resin fibres (see Japanese laid-open patent application No. Sho 59-120440/1984). According to the former process, since the constitution of the mat is retained only be entanglement of the fibres, the resulting product has a low strength so that breakages may occur during the carrying step when moulding or when fitting it to a mould, or tears are liable to occur in the moulded product. According to the latter process, although the strength of the mat is improved to a certain extent, since the interfilamentary adhesion relies on dropwise molten thermoplastic fibres, it is impossible to make use of the strength of the thermoplastic fibres themselves so that the distribution of the adhesion points is sparse and the resulting mat is still liable to undergo tears when moulding, particularly when deep drawing moulding.

According to the invention there is provided a woody fibre mat composed mainly of wood fibres, long fibres, thermoplastic fibres and a thermoset resin and mouldable under heat and pressure into a product of definite shape, which mat is characterized in that the thermoplastic fibres are composite fibres composed of a plurality of components of different melting points; the fibres constituting the mat are entangled with each other and have also been subjected to melt adhesion and joining by a lower melting point component of the composite fibres; and the thermoset resin is in an uncured state.

The woody fibres used in the present invention are woody fibres obtained by cooking and pulping wood chips, pulp, regenerated pulp obtained by pulping waste paper, etc., and constitute a main component of the woody fibre mat. The long fibres include vegetable fibres, such as of cotton, hemp, etc.; animal fibres such as wool; and synthetic fibres such as of nylon, polyesters, etc. The long libres are suitably such as are not deteriorated by heat applied at the time of heat treatment and moulding for producing the mat as discussed later. The lond fibres suitably have a fibre length of 10 to 50 mm, or more, and are blended with the woody fibres. The woody fibres generally have a main fibre length as short as 1 to 2 mm, and by blending such fibres with the long fibres, it is possible to improve the mouldability of the mat, and, further, the use of 10 parts by weight or more of the long fibres per 100 parts by weight of the woody fibres is preferred.

The composite fibres used as the thermoplastic fibres are fibres which consist of a plurality of components having different melting points and may be fibres of the side-by-side type, the sheath-and-core type or the island-in-sea type so that the lower melting point component of the fibres can occupy at least a portion of the fibre surface along the length of the fibre, and the melting point of the lower melting point component is lower than the curing temperature of the thermoset resin. If the difference of the melting point of the lower melting point component of the composite fibres from that of the other component(s) and the difference thereof from the curing temperature of the thermoset resin are both 20°C or more, a wide range of heat treatment conditions for the mat production are possible; hence such a case is preferred. Examples of preferred composite fibres are those wherein the lower melting component is polyethylene, ethylene-vinyl acetate copolymer, low melting point polyester or the like, and the higher melting component(s) is polypropylene, a polyester a polyamide, a polyacrylonitrile, or the like; both components being arranged in side-by-side configuration or the lower melting point component for the shear or sea component and the other component(s) forming the core or isolated components. Among these, composite fibres wherein low density polyethylene, ethylene-vinyl acetate copolymer or a composition composed mainly thereof having a melting point of 120°C or less is used as a the lower meiting point component and polypropylene is used as the other component(s), not only have a low melt adhesion temperature and a low cost of heat treatment for mat production, but also have a good compatibility between the two components, to inhibit peeling; hence even when the fibres are added in a small quantity, their ineffectiveness in improving mat strength is notable. The composite fibres, suitably have a thickness of 1 to 100 deniers, preferably 1.5 to 20 deniers, and a length of 10 to 100 mm, preferably 25 to 50 mm. If the thickness and length exceed the above upper limits, uniform blending is difficult, while if they are less than the above lower limits, the effectiveness of improving the mat strength cannot be obtained. The amount of composite fibres employed, per 100 parts of weight of the woody fibres, is suitably 3 parts by weight or more, preferably 5 parts by weight or more. If it is less than 3 parts by weight, the reinforcing effectiveness may be insufficient. If it exceeds 20 parts by weight, no particular effectiveness is exhibited; hence such a proportion is uneconomical.

The thermoset resin is cured by heat treatment effected when the woody fibre mat is press-moulded into a moulded product, and the resin may be suitably chosen from among known thermoset resins such as phenolic resins, urea resins, alkyd resins, etc. If the thermoset resin is in the form of powder, its blending with other mat-consistuting materials i.e. the woody fibres, etc. is easy. If the resin is in the form of solution, uniform blending may be effected by spraying. The blending ratio of the thermoset resin may suitably be chosen depending on the hardness and strength required for the resulting moulded product, but the proportion will generally be from 5 to 30 parts by weight per 100 parts by weight of the woody fibres.

The woody fibre mat of the invention may also comprise other components, for example, water-resistant agents such as paraffin, pigments, fillers, fire-retardents, etc.

The woody fibers and other raw materials are blended and preliminarily formed into a mat of the desired width, thickness, length and basis weight. The mat is then heat treated at the softening point or higher, preferably at the melting point or higher, of the lower melting point component of the composite fibres but at a temperature below the melting point of the other component(s) of the composite fibres and below the curing temperature of the thermoset resin. At the time of the heat treatment, it is also possible, if desired, to compress the mat under pressure. Blending of the raw materials may be effected as desired and may be effected, for example, by mass of a carding machine, fleece-making machine, random webber or the like. When the woody fibres are fibres obtained by cooking and pulping wood chips, the fibres are suitably blended in a not yet dried state with the long fibres, composite fibres and a powdery thermoset resin, whereby it is possible to release slipping-off loss of the thermoset resin powder, and further it is also possible to dry the woody fibres during heat treatment. Accordingly above blending manner is economically preferable.

The lower melting point component of the composite fibres softened or melted in the course of heat treatment does not form dropwise aggregates, but it is broadly developed over the other component(s) of the composite fibres while the fibre is retained; hence the composite fibres give rise to melt-adhesion not only with each other, but also with the woody fibres and long fibres, at many contact points. After heat treatment, the composite fibres external between these contact points to connect these together. Thus the resulting mat has a high strength and a superior elasticity, and it is possible to prevent its breakage when it is carried. Further, since adhesive points of the composite fibres are softened or melted by heating when moulding, the constitution of the mat is loosened to make it possible to unforcedly absorb the tension afforded by the mould, so that even in the cse of deep-drawing moulding, neither thickness unevenness nor cracking occurs.

The woody fibre mat of the invention is useful as a raw material for parts or goods in various fields, obtained by moulding under pressure and heat and needing a complicated stearic shape and a considerable hardness, such as door panels for automobiles, tray for packagings, furniture, cases for musical instruments, etc.

The present invention will be described in more detail by way of Examples and Comparative examples.

Examples 1 and 2 and Comparative examples 1, 2, 3 and 4

Wood chips of a conifer were cooked and pulped, and steam was separated from the resulting material to obtain woody fibers having a length of 3 mm and a water content of 45% by weight. Hemp cut to a fiber length of 40 mm was used as the long fibers. As the thermoplastic fibers, polypropylene/low density polyethylene side-by-side type composite fibers (composite ratio: 50/50, thickness: 3d, length: 38 mm), low density polyethylene fibers (thickness: 3d, length: 38 mm) and polypropylene fibers (thickness: 3d, length: 38 mm) were used. As the thermoset resin, powdery phenolic resin was used.

The above-mentioned raw materials were sufficiently blended in blending ratios indicated in Table 1, followed by loading the blend onto a mat-making apparatus to form a mat of 50 mm thick, which was then heated in a hot air-circulating drying oven at 120°C for 3 minutes and then compressed by means of rolls so as to give a thickness of 20 mm to obtain a woody fiber mat. In addition, only in the case of Comparative example 4, heating was carried out at 160°C. The blending ratios indicated in Table 1 are expressed in terms of parts by weight on the dry basis.

The above-mentioned woody fiber mat was heat-compressed at a temperature of 220°C, under a pressure of 20 Kg/cm² for one minute, using a mold for producing a door interior panel for automobile, having a length of 1,100 mm, a width of 800 mm and a thickness of 20 mm and at its central part, an armrest part having a length of 500 mm, a width of 100 mm and a depth of 70 mm to carry out deep-drawing molding. The evaluation results are also shown in Table 1. The evaluation methods are described below.

Mat breakage: When a mat of 1,100 mm long, 800 mm wide and 20 mm thick is transferred onto a mold by hands, that which causes breakage is designated as x; that which causes deformation, as Δ; and that which causes neither breakage nor deformation as o.

Cracking of molded product: When a molded product is observed, that which has fissures or cracks is designated as x and that which is good, as o.

Wrinkle of molded product: When a molded product is observed, that which has wrinkles is designated as x and that which is good, as o.

Hardness of molded product: That which has a flexural strength of 300 Kg/cm$^2$ or higher is designated as o; that which has a flexural strength of 100 Kg/cm$^2$ or lower, as x; and that which has a flexural strength of an intermediate value therebetween, as $\Delta$.

Collective evaluation: A product which is judged to be excellent as a woody fiber mat for deep-drawing molding is designated as o and a product which is judged to be not excellent, as x.

## Table 1

| | Composition of woody fiber mat (parts by weight) | | | | Evaluation | | | | |
|---|---|---|---|---|---|---|---|---|---|
| | Woody fibers | Long fibers | Thermoplastic fibers | Thermoset resin | Break-age | Crack | Wrin-kle | Hard-ness | Collec-tive |
| Example 1 | 7 5 | 2 0 | PP/PE 5 | 7 | O | O | O | O | O |
| Example 2 | 7 0 | 2 0 | PP/PE 10 | 7 | O | O | O | O | O |
| Comp. ex. 1 | 7 0 | 2 0 | PP/PE 10 | 0 | O | O | O | ✕ | ✕ |
| Comp. ex. 2 | 8 0 | 2 0 | -- | 7 | ✕ | ✕ | O | O | ✕ |
| Comp. ex. 3 | 7 0 | 2 0 | PE 10 | 7 | △ | ✕ | O | O | ✕ |
| Comp. ex. 4 | 7 0 | 2 0 | PP 10 | 7 | △ | ✕ | O | O | ✕ |

PP:  Polypropylene

PE:  Polyethylene

EP 0 233 767 B1

As shown in Table 1, the woody fiber mats satisfying the requirements of the present invention were very suitable to deep draw forming.

## Examples 3, 4 and 5 and Comparative examples 5 and 6

Woody fiber mats were prepared in the same manner as in the above Examples except that as the thermoplastic fibers were used polyester/low melting polyester sheath-and-core type composite fibers (composite ratio: 50 :50, thickness: 5d, length: 40 mm), polyamide/ethylenevinyl acetate copolymer sheath-and-core type composite fibers(composite ratio: 50/50, thickness: 5d, length: 40 mm), polyester/low density polyethylene sheath-and-core type composite fibers (composite ratio: 50 :50, thickness: 5d, length: 40 mm), low melting polyester fibers (thickness: 5d, length: 40 mm) and polyamide fibers (thickness: 5d, length: 40 mm). The compositions of the resulting woody fiber mats and the results are shown in Table 2.

As shown in Table 2, the woody fiber mats satisfying the requirements of the present invention were very suitable to deep draw forming.

Table 2

| | Composition of woody fiber mat (parts by weight) | | | | Evaluation | | | | |
|---|---|---|---|---|---|---|---|---|---|
| | Woody fibers | Long fibers | Thermoplastic fibers | Thermoset resin | Break-age | Crack | Wrin-kle | Hard-ness | Collec-tive |
| Example 3 | 75 | 20 | PET/LPES 5 | 7 | o | o | o | o | o |
| Example 4 | 75 | 20 | PAM/EVA 5 | 7 | o | o | o | o | o |
| Example 5 | 75 | 20 | PET/PE | 7 | o | o | o· | o | o |
| Comp. ex. 5 | 75 | 20 | LPET 5 | 7 | Δ | × | o | o | × |
| Comp. ex. 6 | 75 | 20 | PAM 5 | 7 | × | × | o | o | × |

PET:   Polyester,        LPET:  Low melting point polyester

PAM:  Polyamide,       EVA:   Ethylene vinyl acetate resin

EP 0 233 767 B1

## Claims

1. A woody fibre mat composed mainly of woody fibres, long fibres, thermoplastic fibres and a thermoset resin and mouldable under heat and pressure into a product of definite shape, which mat is characterized in that the thermoplastic fibres are composite fibres composed of a plurality of components of different melting points, the fibres constituting the mat are entangled with each other and have been subjected to melt adhesion and joining by a lower melting point component of the composite fibres, and the thermoset resin is in an uncured state.

2. A woody fibre mat according to claim 1 characterized in that the lower melting point component of the composite fibres is low density polyethylene, ethylene-vinyl acetate copolymer or a composition composed mainly thereof and having a melting point of 120°C or lower, and another component thereof is polypropylene.

3. A woody fibre mat according to claim 1 or claim 2 characterized in that the composite fibres have a thickness of 1.5 to 20 deniers and a length of 25 to 50 mm.

4. A woody fibre mat according to any one of the preceeding claims characterized in that it contains the composite fibres in an amount of from 5 to 20 parts by weight per 100 parts by weight of said woody fibres.

## Patentansprüche

1. Eine Holzfasermatte bestehend hauptsächlich aus holzigen Farsern, langen Fasern, thermoplastischen Fasern und einem hitzehärtbarem Harz und unter Hitze und Druck zu einem Produkt mit definierter Gestalt formbar, welche Matte dadurch gekennzeichnet ist, daß die thermoplastischen Fasern zusammengesetzte Fasern sind, die aus einer Mehrzahl von Komponenten mit unterschiedlichen Schmelzpunkten bestehen, daß die die Matte bildenden Fasern untereinander verwirrt sind und einer Schmelzverklebung sowie einer Verbindung durch eine Komponente der zusammengesetzten Fasern mit niedigerem Schmelzpunkt unterworfen wurden, und daß das hitzehärtbare Harz in einem unausgehärteten Zustand ist.

2. Eine Holzfasermatte nach Anspruch 1, dadurch gekennzeichnet, daß die Komponente der Zusammengesetzten Fasern mit niedrigerem Schmelzpunkt ein Polyethylen von geringer Dichte, Ethylenvinylacetatkopolymerisat oder eine hauptsächlich hieraus bestehende Zusammensetzung ist und einen Schmelzpunkt von 120 °C. oder geringer hat, und eine weitere Komponente derselben Polypropylen ist.

3. Eine Holzfasermatte nach Anspruch 1 oder 2, dadurch gekennzeichnet, daß die zusammengesetzten Fasern eine Dicke von 1,5 bis 20 Denier und eine Länge von 25 bis 50 mm haben.

4. Eine Holzfasermatte nach einem der voranstehenden Ansprüche, dadurch gekennzeichnet, daß sie die zusammengesetzten Fasern in einer Menge von 5 bis 20 Gewichtsteilen pro hundert Gewichtsteilen der holzigen Fasern enthält.

## Revendications

1. Matelas en fibres ligneuses constitué principalement par des fibres ligneuses, des fibres longues, des fibres thermoplastiques, ainsi qu'une résine thermo-durcissable, et étant moulable par l'action de la chaleur et de la pression en un produit de forme définie, ce matelas étant **caractérisé en ce que** les fibres thermoplastiques sont des fibres composites constituées par plusieurs composants ayant différents points de fusion, les fibres constituant le matelas étant emmêlées l'une à l'autre et ayant été soumises à une adhérence par fusion, tout en étant réunies par un composant des fibres composites ayant un point de fusion inférieur, la résine thermodurcissable se trouvant dans un état non durci.

2. Matelas de fibres ligneuses selon la revendication 1, **caractérisé en ce que** le composant des fibres composites à point de fusion inférieur est constitué d'un polyéthylène à basse densité, d'un copolymère d'éthylène-acétate de vinyle ou bien il s'agit d'une composition constituée principalement de ces derniers et ayant un point de fusion de 120°C ou moins, un autre composant des fibres étant le polypropylène.

3. Matelas de fibres ligneuses selon la revendication 1 ou 2, **caractérisé en ce que** les fibres composites ont une épaisseur de 1,5 à 20 deniers et une longueur de 25 à 50 mm.

4. Matelas de fibres ligneuses selon l'une quelconque des revendications précédentes, **caractérisé en ce qu'il** contient les fibres composites en une quantité allant de 5 à 20 parties en poids par 100 parties en poids des fibres ligneuses.